# FASCICULE DE BREVET EUROPEEN

(11) **EP 2 690 141 B1**
(45) Date de publication et mention de la délivrance du brevet: **18.10.2017**
(21) Numéro de dépôt: 13176346.8
(22) Date de dépôt: 12.07.2013
(51) Int. Cl.: C08L 83/04

(54) **Composition de caoutchouc à base d'un élastomère silicone et d'un MCP, son procédé de préparation, élément souple et système de contrôle/ régulation thermique l'incorporant.**
Gummizusammensetzung auf der Basis eines Silikonelastomers und eines MCP, ihr Herstellungsverfahren, flexibles Element und thermisches Kontroll-/Regulierungssystem, in das es eingebaut ist
Silicone elastomer and MCP rubber composition, method for preparing same, flexible element and thermal control/regulation system including same

(30) Priorité: 25.07.2012 FR 1257218
(43) Date de publication de la demande: 29.01.2014
(73) Titulaire: HUTCHINSON, 75008 Paris (FR)
(72) Inventeur: Van Eibergen, Arthur, 45120 MONTARGIS (FR); Swoboda, Benjamin, 77590 BOIS LE ROI (FR); Le Rossignol, Benoit, 45200 MONTARGIS (FR); Dominiak, Christophe, 45290 VARENNES-CHANGY (FR)
(74) Mandataire: Gevers & Orès

(56) Documents cités:
- EP-A1- 1 067 164
- WO-A2-01/53425
- US-A- 5 816 493

## Description

La présente invention concerne une composition de caoutchouc réticulée à base d'au moins un élastomère silicone « RTV » (pour « room-temperature vulcanizing » en anglais) vulcanisé à température ambiante et comprenant au moins un matériau à changement de phase (MCP en abrégé en français), un procédé de préparation de cette composition, un élément souple comprenant au moins une couche élastomère apte à stocker de l'énergie thermique et à la restituer qui est constituée de cette composition, et un système de contrôle ou de régulation thermique incorporant au moins un tel élément souple. L'invention s'applique en particulier à des systèmes de climatisation passive d'un bâtiment, de réchauffement d'un habitacle ou d'un moteur d'un véhicule, ou encore de réchauffement de canalisations immergées, à titre non limitatif.

L'incorporation à des matrices polymériques de matériaux MCP tels que des acides gras, des sels ou des paraffines, notamment, pour libérer ou absorber de la chaleur par changement d'état grâce à la chaleur latente de fusion qui caractérise ces MCP, est connue de longue date. En effet, ces MCP présentent l'avantage de passer de l'état liquide à l'état solide en libérant de la chaleur lors de leur cristallisation, et inversement de passer de l'état solide à l'état liquide en absorbant de la chaleur lors de leur fusion. Il est connu d'utiliser ces MCP sous forme de poudre avec des nodules dispersés dans une matrice thermoplastique ou élastomère, ou en les encapsulant dans des microsphères par exemple plastiques, ou encore en les greffant sur un support, à titre non limitatif.

Le document US-B2-7 488 773 présente des compositions de caoutchouc réticulées par exemple pour le bâtiment, les véhicules automobiles ou la protection thermique de produits, qui ont été préparées à partir d'un élastomère silicone « RTV» bi-composants de dénomination ELASTOSIL® RT 621 dans lequel a été dispersé un MCP. Plus précisément, ce MCP est de type non encapsulé et, dans les exemples de préparation de ces compositions, il est constitué de n-hexadécane, d'eicosane ou d'un sel de lithium qui présentent tous des points de fusion inférieurs à 40° C, étant précisé que l'on fond ce MCP pour le mélanger à l'état liquide avec celui des composants de l'élastomère silicone qui comprend l'agent de réticulation. Quant à la fraction massique de MCP dans ces compositions ainsi préparées, elle est de 30 %, ce qui équivaut à une quantité de MCP d'environ 43 pce seulement (pce : parties en poids pour cent parties d'élastomère silicone).

Un inconvénient majeur des compositions préparées dans ce document réside dans la quantité réduite de MCP - nettement inférieure à 100 pce - que l'on peut disperser dans cet élastomère silicone, ce qui pénalise notamment l'enthalpie massique de changement d'état ΔH obtenue pour ces compositions (qui est comprise entre 50 J/g et 70 J/g seulement dans les exemples de ce document) et donc l'aptitude de ces compositions à absorber et à restituer l'énergie thermique requise par certaines applications et environnements particulièrement exigeants en matière de réchauffement d'un espace ou d'un fluide, par exemple.

Un but de la présente invention est de proposer une composition de caoutchouc réticulée à base d'au moins un élastomère silicone « RTV » vulcanisé à température ambiante et comprenant au moins un MCP, qui remédie à cet inconvénient tout en présentant une souplesse suffisante pour les applications précitées, et ce but est atteint en ce que la Demanderesse vient de découvrir de manière inattendue que l'utilisation d'un élastomère silicone « RTV » de viscosité dynamique très réduite en comparaison de celle de l'élastomère précité ELASTOSIL® RT 621, permet d'utiliser des quantités de MCP à l'état dispersé dans la composition très supérieures à celles utilisables dans le document précité et donc de conférer à cette composition une enthalpie massique de changement d'état ΔH bien supérieure à celles obtenues dans ce document.

A cet effet, une composition selon l'invention est telle que ledit au moins un élastomère silicone présente une viscosité dynamique mesurée à 23° C selon la norme ISO 3219 qui est inférieure ou égale à 5000 mPa.s, et avantageusement inférieure ou égale à 4000 mPa.s. Encore plus avantageusement, cette viscosité ainsi mesurée est inférieure ou égale à 3000 mPa.s voire à 2000 mPa.s, et elle est de préférence inférieure ou égale à 1000 mPa.s.

On notera que cette viscosité particulièrement réduite du ou de chaque élastomère silicone utilisé permet avantageusement d'utiliser dans la composition plus de 50 pce dudit au moins un MCP non encapsulé et à l'état micronisé et dispersé et, encore plus avantageusement, ce(s) MCP selon une quantité inclusivement comprise entre 100 pce et 300 pce (pce : parties en poids pour cent parties d'élastomère(s)). A titre de comparaison, la viscosité de l'élastomère ELASTOSIL® RT 621 utilisé dans le document précité, mesurée à 23° C selon cette norme ISO 3219, est de 15000 mPa.s.

Il résulte de cette quantité élevée de MCP dans la composition selon l'invention que cette dernière peut présenter une enthalpie massique de changement d'état ΔH supérieure à 70 J/g et avantageusement comprise entre 80 J/g et 200 J/g.

On notera également que cette viscosité particulièrement réduite du ou de chaque élastomère silicone utilisé permet d'utiliser dans la composition au moins une charge thermiquement conductrice selon une quantité supérieure à 50 pce, la composition pouvant alors présenter une conductivité thermique supérieure à 0,2 W.m⁻¹K⁻¹ et avantageusement supérieure à 1 W.m⁻¹K⁻¹.

On notera en outre que le ou les élastomères silicones « RTV » utilisés dans les compositions de l'invention présentent le double avantage d'être réticulables à froid (i.e. à une température typiquement comprise entre 30 C et 40° C seulement) et de conférer à cette composition en utilisation une tenue en température relativement élevée (typiquement à une température pouvant atteindre 250° C).

Encore plus avantageusement, ladite au moins une charge thermiquement conductrice peut être présente dans la composition selon une quantité inclusivement comprise entre 150 pce et 200 pce et est de préférence choisie dans le groupe constitué par les métaux tels que le cuivre, l'aluminium et l'argent, les oxydes métalliques tels que l'oxyde de zinc, les nitrures tels que le nitrure de bore, d'aluminium et d'argent, les matières carbonées telles que le graphite, le graphène et les nanotubes de carbone, et leurs mélanges.

Avantageusement, ledit au moins un élastomère silicone peut être de type à deux composants A et B et est réticulé par polyaddition ou polycondensation. De préférence, ledit au moins un élastomère silicone est réticulé par polyaddition avec lesdits composants A et B et comprend un catalyseur à base de platine.

Egalement avantageusement, ledit au moins un élastomère silicone peut présenter une masse volumique mesurée à 23° C selon la norme ISO 2781 qui est inférieure à 1,1 g/cm³.

Selon un exemple préférentiel de réalisation de l'invention, ledit au moins un MCP comprend de préférence un acide gras, tel que l'acide stéarique, étant précisé que l'on peut utiliser à titre de MCP dans la composition un mélange de plusieurs acides gras saturés et/ou insaturés comprenant par exemple de l'acide stéarique. On notera toutefois que des MCP par exemple choisis parmi des sels hydratés ou métalliques, des paraffines et/ou des polyoléfines sont également utilisables dans une composition selon l'invention.

A titre également préférentiel, ledit ou chaque MCP utilisé présente au moins un point de fusion supérieur à 50° C et par exemple supérieur à 80° C (par exemple voisin de 100° C), contrairement aux MCP du document précité de l'art antérieur, étant précisé que des MCP de type bimodaux (i.e. présentant deux points de fusion) sont en particulier utilisables.

On notera que cette utilisation d'un ou de plusieurs MCP de point(s) de fusion voisin(s) de 100° C ne serait pas possible si l'on utilisait un élastomère réticulable à chaud (i.e. typiquement à plus de 150° C) et non à température ambiante, comme dans la présente invention.

Par composition de caoutchouc « à base d'au moins un élastomère silicone vulcanisé à température ambiante », on entend dans la présente description une composition dont la matrice élastomère est majoritairement constituée (i.e. selon une quantité supérieure à 50 pce, de préférence supérieure à 75 pce) d'un ou de plusieurs élastomères silicones « RTV ». En d'autres termes, une composition selon l'invention pourrait avoir sa matrice élastomère comprenant un ou plusieurs élastomères silicones selon une quantité totale supérieure à 50 pce et optionnellement un ou plusieurs autres élastomères (i.e. autres que des silicones « RTV ») selon une quantité totale inférieure à 50 pce, étant précisé que la matrice élastomère d'une composition selon l'invention est de préférence exclusivement constituée d'un ou de plusieurs élastomères silicones « RTV ».

D'une manière générale, les compositions de l'invention peuvent comprendre en outre tout ou partie des additifs habituellement utilisés dans des compositions de caoutchouc, tels que des retardateurs de flamme (e.g. phosphorés ou halogénés), des agents anti-vieillissement (e.g. des stabilisants vis-à-vis des rayonnements UV et des anti-oxydants), des charges renforçantes et/ou des plastifiants, à titre non limitatif.

Un procédé de préparation selon l'invention d'une composition de caoutchouc telle que définie ci-dessus comprend essentiellement un mélangeage à température ambiante de deux composants A et B à l'état liquide dudit au moins un élastomère silicone « RTV » et dudit au moins un MCP non encapsulé et en poudre, et une réticulation du mélange ainsi obtenu également à température ambiante par polyaddition ou polycondensation.

On notera que ce(s) MCP utilisés à l'état de poudre présentent l'avantage d'impliquer un coût réduit pour la préparation de cette composition, en comparaison des procédés utilisant des MCP encapsulés ou bien de ceux faisant fondre au préalable des MCP non encapsulés avant leur mélangeage à l'état liquide avec les deux composants de l'élastomère silicone « RTV ».

De préférence, on met en oeuvre ce mélangeage de la poudre de MCP dans un mélangeur à pales pour l'obtention du mélange liquide réticulable dans lequel ledit au moins un MCP est dispersé à l'état micronisé, on coule ce mélange liquide dans un moule puis on l'y réticule pendant plusieurs heures.

Un élément souple selon l'invention peut être tubulaire ou sous forme de feuille et comprend au moins une couche élastomère qui est apte à stocker de l'énergie thermique et à la restituer et qui est constituée d'une composition de caoutchouc réticulée telle que définie ci-dessus et de dureté Shore A comprise entre 20 et 90.

Un système de contrôle ou de régulation thermique selon l'invention est en particulier utilisable pour la climatisation passive d'un bâtiment, pour le réchauffement d'un habitacle ou d'un moteur d'un véhicule automobile, aérien ou spatial, pour la régulation thermique d'une batterie d'accumulateurs (par exemple une batterie lithium-ion), ou pour le réchauffement de canalisations immergées par exemple sous-marines transportant un fluide tel qu'une huile ou du pétrole, et ce système incorpore au moins un tel élément souple.

Uniquement à titre d'exemple, une composition selon l'invention peut être utilisée dans un tuyau qui forme cet élément souple et qui est inclus dans un circuit de régulation thermique d'un moteur thermique de véhicule automobile, par exemple transférant un liquide de refroidissement du moteur. Un exemple particulièrement intéressant d'application d'un tel tuyau pour liquide de refroidissement concerne le réchauffement de ce liquide lors du redémarrage du moteur du véhicule. En effet, après que le moteur a été arrêté, le liquide de refroidissement reste pendant un certain temps à une température relativement élevée d'environ 70 à 90° C, ce qui fait que le MCP fondu libère de la chaleur dans ce liquide, lequel est ainsi déjà relativement chaud lorsqu'on redémarre le moteur. Il en résulte une réduction des émissions de gaz carbonique à l'échappement et de la surconsommation de carburant, en comparaison de ce que l'on observe avec un moteur froid.

D'autres caractéristiques, avantages et détails de la présente invention ressortiront à la lecture de la description suivante d'un exemple de réalisation de l'invention donné à titre illustratif et non limitatif.

La Demanderesse a préparé deux compositions de caoutchouc réticulées respectivement « témoin » C0 et selon l'invention C1, dont les formulations (exprimées en pce, i.e. en parties en poids pour cent parties de matrice élastomère, constituée ici d'un seul et même élastomère silicone « RTV ») sont recensées au tableau 1 ci-après et dont les propriétés sont présentées au tableau 2 ci-après (les propriétés mécaniques ont été mesurées à 23° C selon la norme ISO 37 ou son équivalent ASTM D 412).

La composition « témoin » C0 est exclusivement constituée d'un élastomère silicone « RTV » de dénomination ELASTOSIL® RT 604 A/B à deux composants A (contenant un catalyseur à base de platine) et B (contenant l'agent de réticulation), réticulant par addition de A et B. La viscosité de cet élastomère, mesurée à 23° C selon la norme ISO 3219, est d'environ 800 mPa.s et sa masse volumique, mesurée à 23° C selon la norme ISO 2781, est de 0,97 g/cm³. Ainsi, cette composition C0 est dépourvue de tout MCP.

La composition C1 selon l'invention comprend, outre cet élastomère ELASTOSIL® RT 604 A/B, de l'acide stéarique sous forme de poudre micronisée à titre de MCP (ce MCP présente un point de fusion Tf de 56° C) et de la poudre d'aluminium micronisé de dénomination MEP105 à titre de charge thermiquement conductrice.

Pour préparer la composition C1, on a procédé à un mélangeage à température ambiante (à environ 30° C) dans un mélangeur à pales des deux composants A et B à l'état liquide de cet élastomère silicone et de l'acide stéarique à l'état de poudre non encapsulée, puis à une réticulation par polyaddition dans un moule pendant environ 24 heures également à température ambiante, suite à un coulage dans ce moule du mélange liquide obtenu par ce mélangeage.

**Tableau 1 (en pce) :**

| Ingrédients | Composition C0 | Composition C1 |
|---|---|---|
| ELASTOSIL® RT 604 A/B | 100 | 100 |
| Acide stéarique micronisé | - | **250** |
| Aluminium micronisé MEP105 | - | **150** |

**Tableau 2 :**

| Propriétés | C0 | C1 |
|---|---|---|
| **Propriétés thermiques** | | |
| Conductivité thermique (W.m⁻¹K⁻¹) | 0,20 | **0,57** |
| Chaleur latente (J/g) | - | 130 |
| Température de transition (° C) | - | 56 (point de fusion de l'acide stéarique) |

Comme visible à ce tableau 2, la composition C1 selon l'invention présente, en relation avec un élastomère silicone « RTV » dans lequel sont dispersées 250 pce de MCP, une enthalpie massique de changement d'état ΔH nettement supérieure à 70 J/g et une conductivité thermique supérieure à 0,2 W.m⁻¹K⁻¹, rendant cette composition C1 apte à absorber et à restituer de manière très satisfaisante l'énergie thermique requise par des environnements particulièrement exigeants en matière de réchauffement d'un espace ou d'un fluide.

## Revendications

1. Composition de caoutchouc réticulée à base d'au moins un élastomère silicone « RTV » vulcanisé à température ambiante comprenant au moins un matériau à changement de phase (MCP), ledit au moins un élastomère silicone présentant une viscosité mesurée à 23°C selon la norme ISO 3219 qui est inférieure ou égale à 5000 mPa.s., **caractérisée en ce qu'**elle comprend en outre au moins une charge thermiquement conductrice selon une quantité supérieure à 50 pce, correspondant à des parties en poids pour cent parties d'élastomère silicone.

2. Composition selon la revendication 1, **caractérisée en ce que** ledit au moins un élastomère silicone présente une viscosité mesurée à 23° C selon la norme ISO 3219 qui est inférieure ou égale à 4000 mPa.s et de préférence inférieure ou égale à 1000 mPa.s.

3. Composition selon une des revendications précédentes, **caractérisée en ce qu'**elle comprend ledit au moins un MCP non encapsulé et à l'état micronisé et dispersé dans la composition selon une quantité supérieure à 50 pce.

4. Composition selon la revendication 3, **caractérisée en ce que** ledit au moins un MCP est présent dans la composition selon une quantité inclusivement comprise entre 100 pce et 300 pce et comprend de préférence un acide gras, tel que l'acide stéarique.

5. Composition selon la revendication 3 ou 4, **caractérisée en ce qu'**elle présente une enthalpie massique de changement d'état ΔH supérieure à 70 J/g et de préférence comprise entre 80 J/g et 200 J/g.

6. Composition selon l'une quelconque des revendications précédentes, **caractérisée en ce qu'**elle présente une conductivité thermique supérieure à 0,2 W.m⁻¹K⁻¹ et avantageusement supérieure à 1 W.m⁻¹K⁻¹.

7. Composition selon la revendication 6, **caractérisée en ce que** ladite au moins une charge thermiquement conductrice est présente dans la composition selon une quantité inclusivement comprise entre 150 pce et 200 pce et est choisie dans le groupe constitué par les métaux tels que le cuivre, l'aluminium et l'argent, les oxydes métalliques tels que l'oxyde de zinc, les nitrures tels que le nitrure de bore, d'alumininum et d'argent, les matières carbonées telles que le graphite, le graphène et les nanotubes de carbone, et leurs mélanges.

8. Composition selon une des revendications précédentes, **caractérisée en ce que** ledit au moins un élastomère silicone est de type à deux composants A et B et est réticulé par polyaddition ou polycondensation.

9. Composition selon la revendication 8, **caractérisée en ce que** ledit au moins un élastomère silicone est réticulé par polyaddition et comprend un catalyseur à base de platine.

10. Composition selon une des revendications précédentes, **caractérisée en ce que** ledit au moins un élastomère silicone présente une masse volumique mesurée à 23° C selon la norme ISO 2781 qui est inférieure à 1,1 g/cm³,

11. Composition selon une des revendications précédentes, **caractérisée en ce que** ledit au moins un MCP présente au moins un point de fusion supérieur à 50° C et de préférence supérieur à 80° C.

12. Procédé de préparation d'une composition selon l'une quelconque des revendications 1 à 11, **caractérisé en ce qu'**il comprend essentiellement un mélangeage à température ambiante de deux composants A et B à l'état liquide dudit au moins un élastomère silicone « RTV », dudit au moins un MCP non encapsulé et en poudre, et de ladite au moins une charge thermiquement conductrice selon une quantité supérieure à 50 pce, et une réticulation du mélange obtenu également à température ambiante par polyaddition ou polycondensation.

13. Procédé de préparation selon la revendication 12, **caractérisé en ce que** l'on met en oeuvre ce mélangeage dans un mélangeur à pales pour l'obtention du mélange liquide réticulable dans lequel ledit au moins un MCP est dispersé à l'état micronisé, **en ce que** l'on coule ce mélange liquide dans un moule et **en ce que** l'on réticule ce mélange dans ce moule pendant plusieurs heures.

14. Elément souple tubulaire ou sous forme de feuille qui comprend au moins une couche élastomère apte à stocker de l'énergie thermique et à la restituer, **caractérisé en ce que** ladite au moins une couche est constituée d'une composition de caoutchouc réticulée selon une des revendications 1 à 11 de dureté Shore A comprise entre 20 et 90.

15. Système de contrôle ou de régulation thermique en particulier utilisable pour la climatisation passive d'un bâtiment, pour le réchauffement d'un habitacle ou d'un moteur d'un véhicule automobile, aérien ou spatial, pour la régulation thermique d'une batterie d'accumulateurs, ou pour le réchauffement de canalisations immergées par exemple sous-marines transportant un fluide tel qu'une huile ou du pétrole, **caractérisé en ce que** ce système incorpore au moins un élément souple selon la revendication 14.

## Patentansprüche

1. Retikulierte Gummizusammensetzung auf der Basis mindestens eines RTV-Silikonelastomers, vulkanisiert bei Raumtemperatur, umfassend mindestens einen Latentwärmespeicher (MCP), wobei das mindestens eine Silikonelastomer eine Viskosität, gemessen bei 23 °C gemäß der Norm ISO 3219, aufweist, die geringer als oder gleich wie 5000 mPa.s. ist, **dadurch gekennzeichnet, dass** sie außerdem mindestens eine thermisch leitfähige Last in einer Menge von mehr als 50 pce umfasst, die Gewichtsteilen pro hundert Teilen Silikonelastomer entspricht.

2. Zusammensetzung nach Anspruch 1, **dadurch gekennzeichnet, dass** das mindestens eine Silikonelastomer eine Viskosität, gemessen bei 23 °C gemäß der Norm ISO 3219, aufweist, die geringer als oder gleich wie 4000 mPa.s. und vorzugsweise geringer als oder gleich wie 1000 mPa.s. ist.

3. Zusammensetzung nach einem der vorhergehenden Ansprüche, **dadurch gekennzeichnet, dass** sie den mindestens einen MCP, nicht eingekapselt und im mikronisierten Zustand und dispergiert in einer Menge von mehr als 50 pce, umfasst.

4. Zusammensetzung nach Anspruch 3, **dadurch gekennzeichnet, dass** der mindestens eine MCP in der Zusammensetzung in einer Menge vorhanden ist, die inklusiv im Bereich zwischen 100 pce und 300 pce liegt und vorzugsweise eine Fettsäure wie z. B. Stearinsäure umfasst.

5. Zusammensetzung nach Anspruch 3 oder 4, **dadurch gekennzeichnet, dass** sie eine Zustandsänderungs-Massenenthalpie ΔH von mehr als 70 J/g und vorzugsweise im Bereich zwischen 80 J/g und 200 J/g aufweist.

6. Zusammensetzung nach einem beliebigen der vorhergehenden Ansprüche, **dadurch gekennzeichnet, dass** sie eine thermische Leitfähigkeit von mehr als 0, 2 W.m⁻¹K⁻¹und vorzugsweise von mehr als 1 W.m⁻¹K⁻¹ aufweist.

7. Zusammensetzung nach Anspruch 6, **dadurch gekennzeichnet, dass** die mindestens eine thermisch leitfähige Last in der Zusammensetzung in einer Menge vorhanden ist, die inklusiv im Bereich zwischen 150 pce und 200 pce liegt und ausgewählt ist aus der Gruppe, bestehend aus Metallen wie z. B. Kupfer, Aluminium und Silber, Metalloxiden wie z. B. Zinkoxid, Nitriden wie z. B. Bor-, Aluminium und Silbernitrid, Kohlenstoffmaterialien wie z. B. Grahit, Graphen und Kohlenstoffnanoröhrchen und ihren Mischungen.

8. Zusammensetzung nach einem der vorhergehenden Ansprüche, **dadurch gekennzeichnet, dass** das mindestens eine Silikonelastomer vom Typ mit zwei Komponenten A und B ist und durch Polyaddition oder Polykondensation retikuliert ist.

9. Zusammensetzung nach Anspruch 8, **dadurch gekennzeichnet, dass** das mindestens eine Silikonelastomer durch Polyaddition retikuliert ist und einen Katalysator auf der Basis von Platin umfasst.

10. Zusammensetzung nach einem der vorhergehenden Ansprüche, **dadurch gekennzeichnet, dass** das mindestens eine Silikonelastomer eine Volumenmasse, gemessen bei 23 °C gemäß der Norm ISO 2781, aufweist, die geringer als 1,1 g/cm³ ist.

11. Zusammensetzung nach einem der vorhergehenden Ansprüche, **dadurch gekennzeichnet, dass** der mindestens eine MCP mindestens einen Fusionspunkt aufweist, der mehr als 50 °C und vorzugsweise mehr als 80 °C beträgt.

12. Verfahren zur Herstellung einer Zusammensetzung nach einem beliebigen der Ansprüche 1 bis 11, **dadurch gekennzeichnet, dass** es im Wesentlichen eine Mischung bei Raumtemperatur von zwei Komponenten A und B im flüssigen Zustand des mindestens einen RTV-Silikonelastomers, des mindestens einen MCP, nicht eingekapselt und pulverförmig, und der mindestens einen thermisch leitfähigen Last in Menge von mehr als 50 pce und eine Retikulierung des Gemischs umfasst, das auch bei Raumtemperatur durch Polyaddition oder Polykondensierung erhalten wird.

13. Verfahren zur Herstellung nach Anspruch 12, **dadurch gekennzeichnet, dass** diese Mischung in einem Mischer mit Rührstäben durchgeführt wird, um ein retikulierbares flüssiges Gemisch zu erhalten, in dem mindestens ein MCP im mikronisierten Zustand dispergiert wird, und dadurch, dass dieses flüssige Gemisch in eine Form gegossen wird, und dadurch, dass dieses Gemisch in dieser Form während mehrerer Stunden retikuliert wird.

14. Rohrförmiges flexibles oder blattförmiges Element, das mindestens eine Elastomerschicht umfasst, die geeignet ist, um thermische Energie zu speichern und sie wieder abzugeben, **dadurch gekennzeichnet, dass** die mindestens eine Schicht aus einer retikulierten Gummizusammensetzung nach einem der Ansprüche 1 bis 11 mit einer Shore-Härte A besteht, die im Bereich zwischen 20 und 90 liegt.

15. Thermisches Kontroll- oder Regulierungssystem, das insbesondere für die passive Klimatisierung eines Gebäudes, für die Erwärmung eines Innenraums oder eines Motors eines Kraft-, Luft- oder Raumfahrzeugs verwendet werden kann, für die thermische Regulierung eines Akkupacks oder für die Erwärmung von unter Wasser liegenden, z. B. unterseeischen Leitungen, die ein Fluid wie z. B. Öl oder Erdöl transportieren, **dadurch gekennzeichnet, dass** dieses System mindestens ein flexibles Element nach Anspruch 14 einschließt.

## Claims

1. A crosslinked rubber composition based on at least one silicone elastomer "RTV" vulcanized at room temperature comprising at least one phase change material (PCM), said at least one silicone elastomer having a viscosity measured at 23°C according to standard ISO 3219 that is less than or equal to 5,000 mPa.s., **characterised in that** it further comprises at least one thermally conductive filler according to a quantity exceeding 50 pce, corresponding to parts by weight per hundred parts by weight of silicone elastomer.

2. The composition according to claim 1, **characterised in that** said at least one silicone elastomer has a viscosity measured at 23° C according to standard ISO 3219 that is less than or equal to 4,000 mPa.s and preferably less than or equal to 1,000 mPa.s.

3. The composition according to one of the preceding claims, **characterised in that** it comprises said at least one non-encapsulated PCM in micronised state and dispersed in the composition according to a quantity exceeding 50 pce.

4. The composition according to claim 3, **characterised in that** said at least one PCM is present in the,composition according to a quantity inclusively comprised between 100 pce and 300 pce and preferably comprises a fatty acid, such as stearic acid.

5. The composition according to claim 3 or 4, **characterised in that** it has a weight enthalpy of change of state ΔH greater than 70 J/g and preferably between 80 J/g and 200 J/g.

6. Composition according to anyone of the preceding claims, **characterised in that** it has a thermal conductivity greater than 0.2 W.m⁻¹K⁻¹ and advantageously greater than 1 W.m⁻¹K⁻¹.

7. Composition according to claim 6, **characterised in that** said at least one thermally conductive filler is present in the composition according to a quantity inclusively comprised between 150 pce and 200 pce and is chosen in the group consisting of metals such as copper, aluminium and silver, metal oxides such as zinc oxide, nitrides such as boron, aluminium and silver nitride, carbon materials such as graphite, graphene and carbon nanotubes, and mixtures thereof.

8. Composition according to anyone of the preceding claims, **characterised in that** said at least one silicone elastomer is of the type with two components A and B and is crosslinked by Polyaddition or polycondensation.

9. Composition according to claim 8, **characterised in that** said at least one silicone elastomer is crosslinked by polyaddition and comprises a catalyst with a platinum base.

10. Composition according to anyone of the preceding claims, **characterised in that** said at least one silicone elastomer has a density measured at 23°C according to standard ISO 2781 that is less than 1.1 g/cm³.

11. Composition according to anyone of the preceding claims, **characterised in that** said at least one PCM has at least one melting point higher than 50°C and preferably higher than 80°C.

12. A method for preparing a composition according to anyone of claims 1 to 11, **characterised in that** it substantially comprises a mixing at ambient temperature of two components A and B in liquid state of said at least one silicone elastomer "RTV", of said at least one non-encapsulated powdered PCM, and said at least one thermally conductive load according to a quantity greater than 50 pce, and a crosslinking of the obtained mixture at room temperature by polyaddition or polycondensation.

13. The method for preparing according to claim 12, **characterised in that** this mixing is carried out in a blade mixer in order to obtain a crosslinkable liquid mixture in which said at least one PCM is dispersed in a micronised state, **in that** this liquid mixture is poured into a mould and **in that** this mixture is crosslinked in this mould for several hours.

14. A tubular flexible element or in the form of a sheet that comprises at least one elastomer layer able to store thermal energy and to release it back, **characterised in that** said at least one layer is made of a crosslinked rubber composition according to anyone of claims 1 to 11 with a Shore A hardness between 20 and 90.

15. A system for thermal control or regulation in particular that can be used for the passive air conditioning of a building, for the heating of a passenger compartment or of an engine of an air, space or motor vehicle, for the thermal regulation of a battery of accumulators, or for the heating of submerged pipes for example submarine pipes transporting a fluid such as an oil or petroleum, **characterised in that** this system incorporates at least one flexible element according to claim 14.
